# EUROPÄISCHE PATENTSCHRIFT

(11) **EP 3 643 898 B1**
(45) Veröffentlichungstag und Bekanntmachung des Hinweises auf die Patenterteilung: **24.02.2021**
(21) Anmeldenummer: 19204055.8
(22) Anmeldetag: 18.10.2019
(51) Int. Cl.: F01N 13/18, F01N 3/021, F01N 3/28

(54) **VERFAHREN ZUR HERSTELLUNG EINER ABGASBEHANDLUNGSANORDNUNG**
METHOD FOR MANUFACTURING A WASTE GAS TREATMENT ASSEMBLY
PROCÉDÉ DE FABRICATION D'UN DISPOSITIF DE TRAITEMENT DES GAZ D'ÉCHAPPEMENT

(30) Priorität: 25.10.2018 DE 102018126577
(43) Veröffentlichungstag der Anmeldung: 29.04.2020
(73) Patentinhaber: Eberspächer Exhaust Technology GmbH, 66539 Neunkirchen (DE)
(72) Erfinder: Reyer, Bernhard, 73733 Esslingen (DE); Müller, Bernd, 66793 Saarwellingen (DE); Häberle, Jürgen, 70372 Stuttgart (DE); Hartmann, Sylvia, 66578 Schiffweiler (DE); Krause, Michael, 73733 Esslingen (DE)
(74) Vertreter: Ruttensperger Lachnit Trossin Gomoll

(56) Entgegenhaltungen:
- EP-A1- 1 149 992
- US-A- 5 829 132
- US-A1- 2003 103 876
- US-A1- 2007 011 874

## Beschreibung

Die vorliegende Erfindung betrifft ein Verfahren zur Herstellung einer Abgasbehandlungsanordnung, wie zum Beispiel einer Partikelfilteranordnung für eine Abgasanlage einer Brennkraftmaschine.

Derartige Abgasbehandlungsanordnungen umfassen im Allgemeinen ein durch eine Umfangswand bereitgestelltes, rohrartiges Gehäuse, in welches eine Abgasbehandlungseinheit, beispielsweise ein Partikelfilter, umgeben von einer Lage eines die Abgasbehandlungseinheit an der Umfangswand haltenden Fasermaterials, eingeschoben ist. An beiden axialen Enden der Umfangswand sind im allgemeinen trichterartig geformte Abschlusselemente vorgesehen, über welche die Abgasbehandlungsanordnung an andere Systembereiche einer Abgasanlage, beispielsweise Abgasrohre, angebunden werden kann.

Ein Verfahren zur Herstellung einer Abgasbehandlungsanordnung gemäß dem Oberbegriff des Anspruchs 1 und eine mit diesem Verfahren hergestellte Abgasbehandlungsanordnung sind aus der US 5 829 132 A bekannt. Bei diesem bekannten Verfahren werden an beiden axialen Endbereichen einer Umfangswandung der Abgasbehandlungsanordnung Abschlusselemente entweder in die zuvor bereits nach radial innen verformte Umfangswandung oder vor dem Verformen der Umfangswandung nach radial innen eingeschoben.

Aus der US 2007/0011874 A1 sind ein Verfahren zur Herstellung einer Abgasbehandlungsanordnung sowie eine mit Verfahren hergestellte Abgasbehandlungsanordnung bekannt, bei welchem Verfahren an einem stromabwärtigen Endbereich einer Umfangswandung ein Abschlusselement mit einem zylindrischen Abschnitt über die Umfangswandung geschoben wird. Durch eine axial über eine Abgasbehandlungseinheit überstehende Stütz-Materiallage ist eine axiale Haltewirkung für die Abgasbehandlungseinheit in Richtung auf das Abschlusselement zu gebildet.

Es ist die Aufgabe der vorliegenden Erfindung, ein Verfahren zur Herstellung einer Abgasbehandlungsanordnung vorzusehen, mit welchem eine Abgasbehandlungsanordnung in einfach durchzuführender Art und Weise mit einem zuverlässig arbeitenden, kompakten Aufbau bereitgestellt werden kann.

Erfindungsgemäß wird diese Aufgabe gelöst durch ein Verfahren zur Herstellung einer Abgasbehandlungsanordnung gemäß Anspruch 1, die Abgasbehandlungsanordnung umfassend eine in Richtung einer Längsachse langgestreckte, rohrartige Umfangswand mit zwei axialen Endbereichen, eine in der Umfangswand angeordnete Abgasbehandlungseinheit sowie an jedem der beiden axialen Endbereiche der Umfangswand ein mit der Umfangswand verbundenes Abschlusselement, wobei die Abgasbehandlungseinheit an der Umfangswand durch eine die Abgasbehandlungseinheit umgebende und diese bezüglich der Umfangswand abstützende Stütz-Materiallage gehalten ist, wobei das Verfahren die Maßnahmen umfasst:
a) Anbringen eines ersten der beiden Abschlusselemente an einem der axialen Endbereiche der Umfangswand,
b) nach der Maßnahme a), Einschieben der von der Stütz-Materiallage umgebenen Abgasbehandlungseinheit in die Umfangswand an dem anderen axialen Endbereich der Umfangswand,
c) nach der Maßnahme b), Anbringen eines zweiten der Abschlusselemente an dem anderen axialen Endbereich der Umfangswand.

Da bei dem erfindungsgemäßen Verfahren eines der Abschlusselemente bereits vor dem Einschieben der Abgasbehandlungseinheit in die Umfangswand an dieser festgelegt wird, besteht nicht die Gefahr, dass bei bereits in der Umfangswand gehaltener Abgasbehandlungseinheit und einem dann durchzuführenden Arbeitsgang zum Festlegen dieses Abschlusselements an der Umfangswand eine Beschädigung der Abgasbehandlungseinheit oder/und der diese umgebenden Stütz-Materiallage mit der Folge einer beeinträchtigten Funktionalität der Abgasbehandlungsanordnung hervorgerufen wird.

Da weiter bei der Maßnahme a) ein rohrartiger Umfangswand-Verbindungsbereich des ersten Abschlusselements den einen axialen Endbereich der Umfangswand radial außen umgreifend auf die Umfangswand geschoben wird und mit der Umfangswand materialschlüssig, vorzugsweise durch Verschweißen, verbunden wird, werden an der Innenseite der Umfangswand vorhandene Hindernisse, welche das Einschieben der mit der Stütz-Materiallage umgebenen Abgasbehandlungseinheit beeinträchtigen könnten, vermieden.

Zum Abschließen des Innenraums der Abgasbehandlungsanordnung auch am anderen axialen Endbereich wird bei der Maßnahme c) ein rohrartiger Umfangswand-Verbindungsbereich des zweiten Abschlusselements in den anderen axialen Endbereich der Umfangswand eingeschoben und mit der Umfangswand materialschlüssig, vorzugsweise durch Verschweißen, verbunden.

Um für den Vorgang des Einschiebens der Abgasbehandlungseinheit zu gewährleisten, dass die Umfangswand und gegebenenfalls das an diese bereits angebundene Abschlusselement eine geeignete Dimensionierung zur Aufnahme und Halterung der mit der Stütz-Materiallage umgebenen Abgasbehandlungseinheit aufweist, wird vorgeschlagen, dass bei der Maßnahme a) nach dem Anbringen des ersten Abschlusselements an der Umfangswand die Umfangswand zur Bereitstellung einer Soll-Abmessung verformt, vorzugsweise radial aufgeweitet, wird.

Eine axial kompakte Bauart kann dadurch unterstützt werden, dass bei der Maßnahme b) die mit der Stütz-Materiallage umgebene Abgasbehandlungseinheit so weit in die Umfangswand eingeschoben wird, dass die Stütz-Materiallage sich in einem axialen Bereich der materialschlüssigen Verbindung des ersten Abschlusselements mit der Umfangswand erstreckt oder/und sich axial mit dem Umfangswand-Verbindungsbereich des ersten Abschlusselements überlappt. Da das Positionieren der Abgasbehandlungseinheit bzw. der Stütz-Materiallage erst nach dem Anbinden des Abschlusselements an die Umfangswand erfolgt, besteht nicht die Gefahr, dass durch eine beispielsweise durch Verschweißung herbeigeführte Verbindung des Abschnittselements mit der Umfangswand eine Beschädigung der Stütz-Materiallage oder/und der Abgasbehandlungseinheit entsteht.

Für eine axial kompakte Bauart kann bei der Maßnahme b) die mit der Stütz-Materiallage umgebene Abgasbehandlungseinheit so weit in die Umfangswand eingeschoben werden, dass die Abgasbehandlungseinheit sich nicht über den einen axialen Endbereich der Umfangswand hinaus erstreckt. Vorzugsweise wird derart vorgegangen, dass bei der Maßnahme b) die mit der Stütz-Materiallage umgebene Abgasbehandlungseinheit so weit in die Umfangswand eingeschoben wird, dass die Abgasbehandlungseinheit im Wesentlichen bündig mit der Umfangswand endet.

Bei einer alternativen, zu einer axial noch kompakteren Bauart führenden Vorgehensweise wird vorgeschlagen, dass bei der Maßnahme b) die mit der Stütz-Materiallage umgebene Abgasbehandlungseinheit so weit in die Umfangswand eingeschoben wird, dass die Abgasbehandlungseinheit sich über den einen axialen Endbereich der Umfangswand hinaus in einen in dem ersten Abschlusselement gebildeten Abschlusselement-Innenraum erstreckt. Da in dem in den Abschlusselement-Innenraum sich erstreckenden Längenbereich die Abgasbehandlungseinheit nicht von der Umfangswand umgeben ist, kann vorzugsweise vorgesehen sein, dass die Abgasbehandlungseinheit in ihrem in den Abschlusselement-Innenraum sich erstreckenden Längenbereich nicht von der Stütz-Materiallage umgeben ist. In diesem Längenbereich könnte die Stütz-Materiallage keine die Abgasbehandlungseinheit bezüglich der Umfangswand abstützende bzw. haltende Wirkung entfalten.

Um in einfacher Art und Weise eine erfindungsgemäß hergestellte Abgasbehandlungsanordnung in eine Abgasanlage integrieren zu können, wird vorgeschlagen, dass wenigstens ein, vorzugsweise jedes Abschlusselement einen trichterartigen Verjüngungsbereich zwischen einem rohrartigen Umfangswand-Verbindungsbereich und einem rohrartigen Abgasrohr-Verbindungsbereich umfasst.

Das erste Abschlusselement kann ein bezüglich einer Abgasströmungsrichtung in einer Abgasanlage stromaufwärts bezüglich der Umfangswand positioniertes Eingangs-Abschlusselement sein.

Da mit dem erfindungsgemäßen Aufbau die Möglichkeit geschaffen ist, die Abgasbehandlungseinheit mit der diese umgebenden Stütz-Materiallage so zu positionieren, dass die Stütz-Materiallage den Bereich, in welchem das erste Abschlusselement an die Umfangswand angebunden ist, überlappt und somit nach innen hin thermisch isoliert, müssen keine weiteren Maßnahmen ergriffen werden, um diesen Verbindungsbereich vor im Verbrennungsbetrieb einer Brennkraftmaschine auch in einer Abgasanlage auftretenden hohen Temperaturen zu schützen. Aus diesem Grunde kann bei dem erfindungsgemäßen Verfahren so vorgegangen werden, dass ein in dem ersten Abschlusselement gebildeter Abschlusselement-Innenraum innentrichterfrei ist. Dies bedeutet, dass in diesem Abschlusselement-Innenraum kein Innentrichter oder irgend eine andere Baugruppe vorgesehen ist, die den Bereich der festen Verbindung des ersten Abschlusselements mit der Umfangswand gegen die direkte Anströmung durch Abgas abschirmt. In einem in dem zweiten Abschlusselement gebildeten Abschlusselement-Innenraum kann ein Innentrichter angeordnet sein, welcher insbesondere den Bereich der materialschlüssigen Verbindung des zweiten Abschlusselements mit der Umfangswand gegen die direkte Anströmung durch Abgas abschirmen kann.

Um Wärmeverluste nach außen hin zu vermeiden und somit zu gewährleisten, dass eine geeignete Temperatur für den Betrieb der Abgasbehandlungseinheit möglichst schnell erreicht wird bzw. auch bei niedrigen Umgebungstemperaturen beibehalten werden kann, wird weiter vorgeschlagen, dass nach der Maßnahme a) wenigstens das erste Abschlusselement mit einer Isoliermateriallage und einer die Isoliermateriallage an ihrer Außenseite überdeckenden Dünnwandisolierung umgeben wird. Es ist in diesem Zusammenhang darauf hinzuweisen, dass diese Verfahrensmaßnahme grundsätzlich zu jedem Zeitpunkt durchgeführt werden kann, nachdem das erste Abschlusselement an der Umfangswand festgelegt worden ist. Vorteilhafterweise wird diese Verfahrensmaßnahme durchgeführt, nachdem auch das zweite Abschlusselement an der Umfangswand festgelegt worden ist, die Abgasbehandlungsanordnung ansonsten also im Wesentlichen vollständig zusammengebaut ist.

Die Stütz-Materiallage kann eine um den Außenumfang der Abgasbehandlungseinheit gewickelte Fasermaterialmatte umfassen. Die Abgasbehandlungseinheit kann einen Partikelfilter umfassen.

Die Erfindung betrifft ferner eine Abgasbehandlungsanordnung, hergestellt mit einem erfindungsgemäßen Verfahren, umfassend:
- eine Richtung einer Längsachse langgestreckte, rohrartige Umfangswand mit zwei axialen Endbereichen,
- ein an einem der axialen Endbereiche der Umfangswand mit einem Umfangswand-Verbindungsbereich die Umfangswand radial außen übergreifendes und an der Umfangswand materialschlüssig, vorzugsweise durch Verschweißen, festgelegtes erstes Abschlusselement,
- ein an dem anderen der axialen Endbereiche der Umfangswand mit einem Umfangswand-Verbindungsbereich an der Umfangswand materialschlüssig, vorzugsweise durch Verschweißen, festgelegtes zweites Abschlusselement,
- eine mit einer Stütz-Materiallage umgebene und durch die Stütz-Materiallage an der Umfangswand gehaltene Abgasbehandlungseinheit,
wobei:
im einen axialen Endbereich der Umfangswand die Stütz-Materiallage sich in einem axialen Bereich der materialschlüssigen Verbindung des ersten Abschlusselements mit der Umfangswand erstreckt oder/und sich axial mit dem Umfangswand-Verbindungsbereich des ersten Abschlusselements überlappt,
   oder/und
die Abgasbehandlungseinheit sich über den einen axialen Endbereich der Umfangswand hinaus in einen in dem ersten Abschlusselement gebildeten Abschlusselementen-Innenraum erstreckt,
   oder/und
ein in dem ersten Abschlusselement gebildeter Abschlusselement-Innenraum innentrichterfrei ist.

Es ist darauf hinzuweisen, dass eine derartige Abgasbehandlungsanordnung zusätzlich zu den vorangehend angeführten Merkmalsgruppen alle vorangehend mit Bezug auf das erfindungsgemäße Verfahren erläuterten und nachfolgend detailliert beschriebenen, für den Aufbau der Abgasbehandlungsanordnung relevanten Merkmale einzeln und in beliebiger Kombination aufweisen kann.

Ferner betrifft die Erfindung eine Abgasanlage, umfassend eine Abgasbehandlungsanordnung mit dem vorangehend erläuterten Aufbau, hergestellt mit einem erfindungsgemäßen Verfahren.

Die Erfindung wird nachfolgend mit Bezug auf die beiliegenden Figuren detailliert beschrieben. Es zeigt:
- Fig. 1: eine Prinzipdarstellung eines Teils einer Abgasanlage für eine Brennkraftmaschine;
- Fig. 2: eine Längsschnittansicht einer Abgasbehandlungsanordnung der Abgasanlage der Fig. 1, geschnitten längs einer Linie I-I in Fig.1;
- Fig.3: eine der Fig. 2 entsprechende Längsschnittansicht einer alternativen Ausgestaltungsart einer Abgasbehandlungsanordnung.

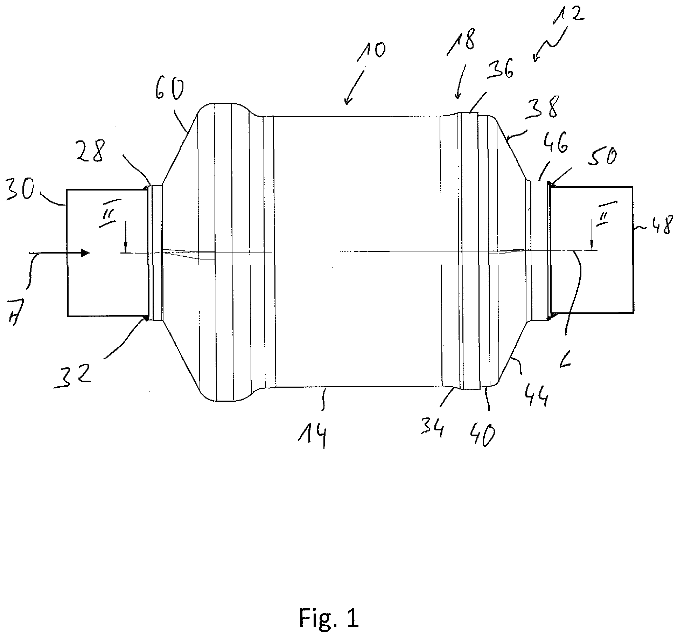

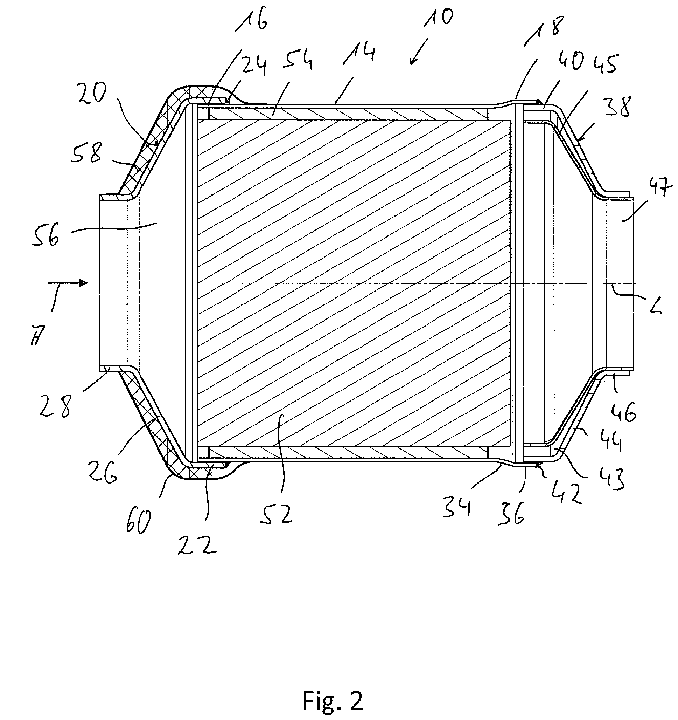

In den Fig. 1 und Fig. 2 ist eine beispielsweise in Form einer Partikelfilteranordnung aufgebaute Abgasbehandlungsanordnung 10 einer allgemein mit 12 bezeichneten Abgasanlage einer Brennkraftmaschine in einem Fahrzeug dargestellt. Die Abgasbehandlungsanordnung 10 umfasst eine rohrartige, im Wesentlichen zylindrisch gestaltete und in Richtung einer Längsachse L langgestreckte Umfangswand 14 mit zwei axialen Endbereichen 16, 18. Am ersten axialen Endbereich 16 ist die Umfangswand 14 mit einem ersten Abschlusselement 20 fest verbunden. Hierzu ist ein im Wesentlichen rohrartiger bzw. zylindrisch geformter Umfangswand-Verbindungsbereich 22 des ersten Abschlusselements 20 auf den axialen Endbereich 16 der Umfangswand 14 aufgeschoben und durch eine in Umfangsrichtung vorzugsweise vollständig umlaufende Schweißnaht 24 mit der Umfangswand 14 fest verbunden. Das erste Abschlusselement 20 weist, anschließend an den Umfangswand-Verbindungsbereich 22 einen trichterartig sich verjüngenden Verjüngungsbereich 26 auf, an welchen ein ebenfalls rohrartig bzw. im Wesentlichen zylindrisch geformter Abgasrohr-Verbindungsbereich 28 anschließt. Ein Abgas in einer Abgasströmungsrichtung A beispielsweise von einer Brennkraftmaschine oder einem weiter stromaufwärts gelegenen Systembereich der Abgasanlage 12 zur Abgasbehandlungsanordnung 10 führendes Abgasrohr 30 kann in den Abgasrohr-Verbindungsbereich 28 eingeschoben und mit diesem durch eine vorzugsweise in Umfangsrichtung vollständig umlaufende Schweißnaht 32 fest verbunden sein.

Am zweiten axialen Endbereich 18 ist die Umfangswand 14 in einem Übergangsbereich 34 radial erweitert und weist, anschließend an den Übergangsbereich 34 einen im Wesentlichen zylindrisch geformten Endabschnitt 36 auf, in welchen ein zweites Abschlusselement 38 mit einem im Wesentlichen rohrartigen bzw. zylindrischen Umfangswand-Verbindungsbereich 40 eingeschoben ist. Durch eine in Umfangsrichtung vorzugsweise im Wesentlichen vollständig umlaufende Schweißnaht 42 ist die Umfangswand 14 in ihrem zweiten axialen Endbereich 18 an das zweite Abschlusselement 38 fest angebunden.

Das zweite Abschlusselement 38 weist anschließend an den Umfangswand-Verbindungsbereich 40 einen trichterartig sich verjüngenden Verjüngungsbereich 44 und anschließend an diesen einen rohrartigen bzw. im Wesentlichen zylindrischen Abgasrohr-Verbindungsbereich 46 auf. In einem im Wesentlichen von dem zweiten Abschlusselement 38 umschlossenen Abschlusselement-Innenraum 43 ist ein in seiner Formgebung im Wesentlichen an die trichterartige Form des zweiten Abschlusselements 38 angepasster Innentrichter 45 vorgesehen. Dieser ist mit einem im Wesentlichen zylindrischen Endbereich 47 in den Abgasrohr-Verbindungsbereich 46 eingeschoben, vorzugsweise derart, dass der Endbereich 47 in Richtung der Längsachse L über den Abgasrohr-Verbindungsbereich 46 nach außen axial hervorsteht. In den Endbereich 47 des Innentrichters 45 bzw. den diesen Endbereich 47 aufnehmenden Abgasrohr-Verbindungsbereich 46 kann ein das aus der Abgasbehandlungsanordnung 10 austretende Abgas aufnehmendes Abgasrohr 48 eingeschoben und durch eine in Umfangsrichtung vorzugsweise im Wesentlichen vollständig umlaufende Schweißnaht 50 fest angebunden sein. Da der Endbereich 47 des Innentrichters 45 axial über den Abgasrohr-Verbindungsbereich 46 hervorsteht, wird durch die Schweißnaht 50 auch eine feste Anbindung des Innentrichters 45 an das zweite Abschlusselement 38 bewirkt. Der Innentrichter 45 kann so geformt und dimensioniert sein, dass er sich, mit Ausnahme des in den Abgasrohr-Verbindungsbereich 46 eingeschobenen Endbereichs 47, unter Belassung eines Zwischenraums in Abstand zum Verjüngungsbereich 44 und zum Umfangswand-Verbindungsbereich 40 des zweiten Abschlusselements 38 erstreckt und beispielsweise axial näherungsweise bündig mit dem Umfangswand-Verbindungsbereich 40 endet.

In dem nach radial außen von der Umfangswand 14 umschlossenen Innenraum der Abgasbehandlungsanordnung 10 ist eine Abgasbehandlungseinheit 52 angeordnet. Die Abgasbehandlungseinheit 52 ist bei Ausgestaltung der Abgasbehandlungsanordnung 10 als Partikelfilteranordnung als Partikelfilter aufgebaut und ist an ihrem Außenumfang von einer Stütz-Materiallage 54 vorzugsweise im Wesentlichen vollständig umgeben. Durch die zwischen der Abgasbehandlungseinheit 52 und der Umfangswand 14 komprimiert gehaltene Stütz-Materiallage 54 ist die Abgasbehandlungseinheit 52 an der Umfangswand 14 abgestützt bzw. bezüglich dieser in radialer und auch in axialer Richtung fest gehalten. Die Stütz-Materiallage 54 kann beispielsweise eine um den Außenumfang der Abgasbehandlungseinheit 52 gewickelte Fasermateriallage bzw. Fasermaterialmatte umfassen, die mit einer oder mehreren radial gestaffelten Schichten aufgebaut sein kann.

In Fig. 2 ist zu erkennen, dass die Abgasbehandlungseinheit 52 am Endbereich 16 der Umfangswand 14 axial bündig mit der Umfangswand 14 endet. Die Stütz-Materiallage 54 kann in axialer Richtung etwas zurückversetzt enden. Die Stütz-Materiallage 54 erstreckt sich in axialer Richtung aber so weit, dass sie den Bereich, in welchem das erste Abschlusselement 20 durch die Schweißnaht 24 mit der Umfangswand 14 fest verbunden ist, axial überlappt und somit radial zwischen der Schweißnaht 24 und der Abgasbehandlungseinheit 52 liegt. Im Bereich des stromabwärtigen Endbereichs 18 endet die Abgasbehandlungseinheit 52 bereits vor der Umfangswand 14, beispielsweise näherungsweise im Bereich des Übergangsbereichs 34. Auf diese Art und Weise wird ein gegenseitiges Stören mit dem zweiten Abschlusselement 38 bzw. dem darin angeordneten Innentrichter 45 vermieden. Der Innentrichter 45 endet mit geringem axialen Abstand vor dem Ausströmende der Abgasbehandlungseinheit 52 und nimmt somit im Wesentlichen das aus dieser austretende Abgas auf. Der Innentrichter 45 schirmt somit das zweite Abschlusselement 38 und insbesondere auch den Bereich der festen Verbindung desselben mit der Umfangswand 14 gegen die direkte Anströmung durch das die Abgasbehandlungseinheit 52 verlassende Abgas ab.

Im Betrieb einer Brennkraftmaschine entstehendes Abgas strömt in der Abgasanlage 10 in der Abgasströmungsrichtung A in einen vom Abschlusselement 20 umschlossenen Abschlusselement-Innenraum 56 ein. Das Abschlusselement 20 bildet somit ein in der Abgasbehandlungsanordnung 10 im stromaufwärtigen Bereich positioniertes Eingangs-Abschlusselement. Das so in den Abschlusselement-Innenraum 56 gelangende Abgas durchströmt dann die Abgasbehandlungseinheit 52, wird darin behandelt, beispielsweise von Rußpartikeln weitestgehend befreit, und verlässt die Abgasbehandlungsanordnung 10 an deren stromabwärtigem Ende über das ein Ausgangs-Abschlusselement bereitstellende zweite Abschlusselement 38 bzw. den darin vorgesehenen Innentrichter 45 und wird über das Abgasrohr 48 zu weiteren Systembereichen der Abgasanlage 12 geführt.
Um insbesondere im stromaufwärtigen Bereich, also stromaufwärts der Abgasbehandlungseinheit 52, thermische Verluste zu vermeiden, ist das erste Abschlusselement 20 an seiner Außenseite von einer Isoliermateriallage 58 umgeben, welche nach außen hin durch eine Dünnwandisolierung 60 abgeschirmt ist. Während die Isoliermateriallage 58 beispielsweise mit Glasfasermaterial oder dergleichen aufgebaut sein kann, ist die Dünnwandisolierung 60 vorzugsweise aus Metallblech aufgebaut, beispielsweise mit zwei in aneinander angrenzenden Umfangsbereichen miteinander durch Formschluss, beispielsweise Umbördeln, oder/und Materialschluss, beispielsweise Verschweißen, verbundenen Halbschalen, die in ihren axialen Endbereichen zusätzlich beispielsweise durch Verschweißung an die Umfangswand 14 einerseits und das erste Abschlusselement 20 andererseits fest angebunden sein können.

Nachfolgend wird ein Verfahren zur Herstellung einer Abgasbehandlungsanordnung 10, wie sie in Fig. 1 dargestellt ist, detailliert beschrieben.

Bei diesem Herstellungsvorgang werden zunächst die Umfangswand 14 und die beiden Abschlusselemente 20, 38 als Blechumformteile bereitgestellt. Dabei können beispielsweise die beiden Abschlusselemente 20, 28 durch Tiefziehen jeweiliger scheibenartiger Blechrohlinge erzeugt werden, während die Umfangswand 14 durch Rollen eines Blechrohlings in eine rohrartige Struktur und Verbinden der in diesem Zustand in Umfangsrichtung aneinander angrenzenden Ränder des Blechrohlings miteinander durch Verschweißen hergestellt werden kann.

Es wird dann das ein Eingangs-Abschlusselement bildende erste Abschlusselement 20 mit seinem Umfangswand-Verbindungsbereich 22 auf den axialen Endbereich 16 der Umfangswand 14 aufgeschoben. Diese Bauteile werden dann durch Erzeugen der Schweißnaht 24 miteinander fest verbunden.

Nach Herstellung dieses Verbundes kann in einem Kalibriervorgang die zunächst mit einem vorbestimmten Untermaß bereitgestellte Umfangswand 14 auf das für die Aufnahme der Abgasbehandlungseinheit 52 geeignete Soll-Maß radial aufgeweitet werden. Alternativ kann dieser Kalibriervorgang bereits auch vor dem Zusammenbau der Umfangswand 14 mit dem ersten Abschlusselement 20 durchgeführt werden. Ferner kann entweder beim Herstellungsvorgang der Umfangswand 14 oder bei der Durchführung des Kalibriervorgangs die Umfangswand 14 auch in ihrem axialen Endbereich 18 mit der in Fig. 2 erkennbaren, radial erweiterten Struktur zur Aufnahme des zweiten Abschlusselements bereitgestellt werden.

In den Verbund aus Umfangswand 14 und erstem Abschlusselement 20 wird nachfolgend die mit der Stütz-Materiallage 54 umgebene Abgasbehandlungseinheit 52 am axialen Endbereich 18 der Umfangswand 14 eingeschoben. Um bei diesem Einschieben eine Beschädigung der Stütz-Materiallage 54 zu vermeiden, kann zusätzlich zu der bereits radial erweiterten Struktur der Umfangswand 14 im axialen Endbereich 18 ein axial anschließend an den axialen Endbereich 18 positionierter Stopftrichter eingesetzt werden, in welchem die Stütz-Materiallage 54 radial komprimiert und in diesem Zustand dann in die Umfangswand 14 eingeschoben werden kann.

Bei der in Fig. 2 dargestellten Ausgestaltungsform wird die Abgasbehandlungseinheit 52 so weit in die Umfangswand 14 eingeschoben, dass am axialen Endbereich 16, also am stromaufwärtigen axialen Ende der Umfangswand 14, die Abgasbehandlungseinheit 52 axial nicht über die Umfangswand 14 hervorsteht. Vorzugsweise kann die Abgasbehandlungseinheit 52 so positioniert werden, dass sie im axialen Endbereich 16 mit der Umfangswand 14 im Wesentlichen bündig endet. Die die Abgasbehandlungseinheit 52 außen umgebende Stütz-Materiallage 54 ist so dimensioniert, dass sie nicht bis unmittelbar an das axiale Ende der Abgasbehandlungseinheit 52 heranreicht, sondern kurz davor endet, so dass auch bezüglich des axialen Endbereichs 16 der Umfangswand 14 die Stütz-Materiallage 54 geringfügig axial zurückversetzt endet. Auf diese Art und Weise wird vermieden, dass Teile der durch die Umfangswand 14 radial komprimiert gehaltenen Stütz-Materiallage 54 axial über den axialen Endbereich 16 der Umfangswand 14 bzw. die Abgasbehandlungseinheit 52 in den Abschlusselement-Innenraum 56 hervorstehen. Auch im anderen axialen Endbereich 18 der Umfangswand 14 ist die Stütz-Materiallage 54 so dimensioniert bzw. angeordnet, dass sie nicht bis an das axiale Ende der Abgasbehandlungseinheit 52 heranreicht, sondern kurz vor diesem axialen Ende endet, so dass auch in diesem Bereich nicht die Gefahr besteht, dass durch die radiale Kompression axial ausweichende Teile der Stütz-Materiallage axial über die Abgasbehandlungseinheit 52 hervorstehen.

Die Stütz-Materiallage 14 ist jedoch so weit bis an das axiale Ende der Abgasbehandlungseinheit 52 bzw. in den axialen Endbereich 16 der Umfangswand 14 geführt, dass sie den Bereich, in welchem das erste Abschlusselement 20 durch die Schweißnaht 24 mit der Umfangswand 14 verbunden ist, axial überdeckt und sich auch bereichsweise axial mit dem Umfangswand-Verbindungsbereich 22 des ersten Abschlusselements 20 axial überlappt. Auf diese Art und Weise wird eine thermische Abschirmung für die Schweißnaht 24 gegen die im Verbrennungsbetrieb mit hoher Temperatur in die Abgasbehandlungseinheit 10 eingeleiteten Abgase erreicht. Da die Abgasbehandlungseinheit 52 mit der diese umgebenden Stütz-Materiallage 54 erst nach dem Erzeugen der Schweißnaht 54 in den Verbund aus Umfangswand 14 und erstem Abschlusselement 20 eingeschoben wird, besteht nicht die Gefahr, dass bei der Erzeugung der Schweißnaht 24 eine zu diesem Zeitpunkt bereits im Inneren der Umfangswand 14 positionierte Stütz-Materiallage beschädigt werden könnte.

In einem dann folgenden Arbeitsgang wird das den Innentrichter 45 bereits aufnehmende zweite Abschlusselement 38 in den radial erweiterten axialen Endbereich 18 der Umfangswand 14, insbesondere den Endabschnitt 36 derselben, eingeschoben. Zu diesem Zeitpunkt ist der Innentrichter 45 mit dem zweiten Abschlusselement 38 beispielsweise nur durch Einstecken und dadurch erzeugte Presspassung des Endbereichs 47 desselben im Abgasrohr-Verbindungsbereich 46 gehalten. Es wird dann das zweite Abschlusselement 38 durch Erzeugen der Schweißnaht 42 materialschlüssig mit der Umfangswand 14 verbunden.

Bereits vor oder auch erst nach dem Anbinden des zweiten Abschlusselements 38 an die Umfangswand 14 kann im stromaufwärtigen Endbereich die Abgasbehandlungseinheit 12, insbesondere das erste Abschlusselement 20, an der Außenseite mit der Isoliermateriallage 58 umgeben werden. Nachfolgend wird dann die beispielsweise mit zwei Halbschalen aufgebaute Dünnwandisolierung 60 so angeordnet, dass sie die Isoliermateriallage 58 radial außen überdeckt und axial anschließend an die Isoliermateriallage 58 einerseits den Abgasrohr-Verbindungsbereich 28 und andererseits die Umfangswand 14 radial außen übergreift und dort mit dem ersten Abschlusselement 20 einerseits und der Umfangswand 14 andererseits beispielsweise durch Verschweißung fest verbunden wird.

In einem dann weiter folgenden Arbeitsgang kann die in vorangehend beschriebener Art und Weise hergestellte Abgasbehandlungsanordnung 10 dann mit anderen Systembereichen der Abgasanlage 12, beispielsweise den beiden Abgasrohren 30, 48 verbunden werden. Dabei wird das Abgasrohr 30 in den Abgasrohr-Verbindungsbereich 28 des ersten Abschlusselements 20 eingeschoben und damit durch Erzeugen der Schweißnaht 32 verbunden. Das Abgasrohr 48 wird in den Endbereich 47 des Innentrichters 45 und damit auch den Abgasrohr-Verbindungsbereich 46 des zweiten Abschlusselements 38 eingesetzt und sowohl mit dem Innentrichter 45, als auch dem zweiten Abschlusselement 38 durch Erzeugen der Schweißnaht 50 verbunden, wodurch gleichzeitig auch eine feste Verbindung des Innentrichters 45 mit dem zweiten Abschlusselement 38 erzeugt wird.

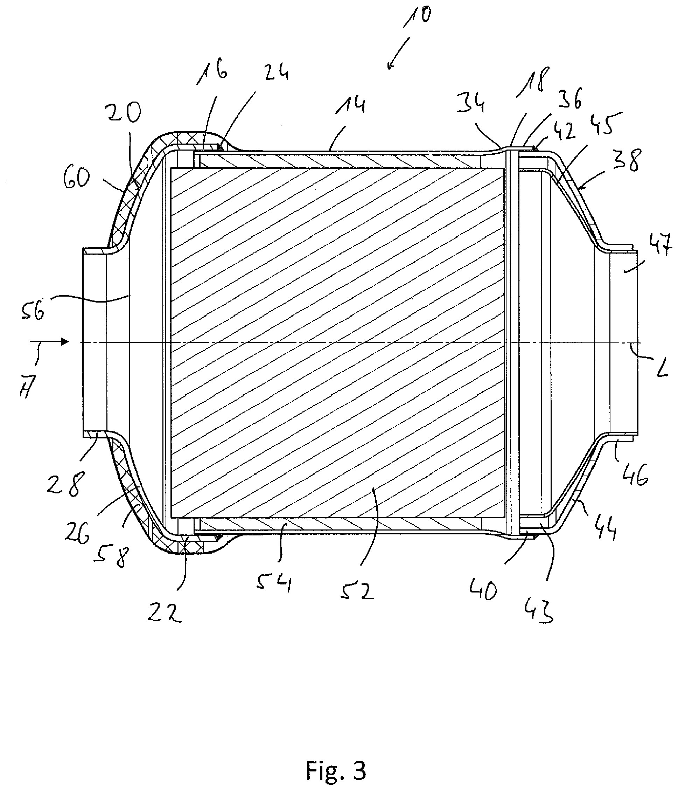

Eine alternative Ausgestaltungsart einer Abgasbehandlungseinheit ist in Fig. 3 gezeigt. Diese entspricht sowohl hinsichtlich ihres Aufbaus als auch hinsichtlich der Vorgehensweise, mit welcher diese hergestellt werden kann, der vorangehend mit Bezug auf die Fig. 2 detailliert beschriebenen Ausgestaltungsform, so dass auf die vorangehenden Ausführungen verwiesen werden kann.

Zu erkennen ist in Fig. 3, dass bei dieser Ausgestaltungsform die Abgasbehandlungseinheit 52 so weit in die Umfangswand 14 eingeschoben wird, dass in ihrem stromaufwärtigen Endbereich die Abgasbehandlungseinheit 52 axial über den axialen Endbereich 16 der Umfangswand 14 hervorsteht und sich somit axial in den Abschlusselement-Innenraum 56 hinein erstreckt. Dies ist insbesondere auch deshalb möglich, da im Inneren des ersten Abschlusselements 20 kein Innentrichter vorgesehen ist. Ein derartiger Innentrichter ist auch bei der in Fig. 2 dargestellten Ausgestaltungsform im stromaufwärtigen Endbereich der Abgasbehandlungseinheit 10, also im Abschlusselement-Innenraum 56 daher nicht erforderlich, da die die feste Verbindung des ersten Abschlusselements 20 mit der Umfangswand 14 erzeugende Schweißnaht 24 durch die Stütz-Materiallage 24 thermisch abgeschirmt ist und insofern keine weiteren Maßnahmen erforderlich sind, um eine übermäßige Erwärmung im Bereich der Schweißnaht 24 zu verhindern.

Mit dem in Fig. 3 dargestellten Aufbau wird der gesamte axial zur Verfügung stehende Bauraum noch effizienter genutzt. Dies ermöglicht es im Vergleich zu der in Fig. 2 dargestellten Ausgestaltung, bei gleich dimensionierter Abgasbehandlungseinheit 52 die gesamte Abgasbehandlungsanordnung 10 axial kürzer zu bauen oder bei gleich dimensionierter Umfangswand eine zu einer noch effizienteren Abgasreinigung führende, axial länger bauende Abgasbehandlungseinheit 52 einzusetzen.

## Patentansprüche

1. Verfahren zur Herstellung einer Abgasbehandlungsanordnung, die Abgasbehandlungsanordnung umfassend eine in Richtung einer Längsachse (L) langgestreckte, rohrartige Umfangswand (14) mit zwei axialen Endbereichen (16, 18), eine in der Umfangswand (14) angeordnete Abgasbehandlungseinheit (52) sowie an jedem der beiden axialen Endbereiche (16, 18) der Umfangswand (14) ein mit der Umfangswand (14) verbundenes Abschlusselement (20, 38), wobei die Abgasbehandlungseinheit (52) an der Umfangswand (14) durch eine die Abgasbehandlungseinheit (52) umgebende und diese bezüglich der Umfangswand (14) abstützende Stütz-Materiallage (54) gehalten ist,
wobei das Verfahren die Maßnahmen umfasst:
a) Anbringen eines ersten der beiden Abschlusselemente (20, 38) an einem der axialen Endbereiche (16, 18) der Umfangswand (14),
b) nach der Maßnahme a), Einschieben der von der Stütz-Materiallage (54) umgebenen Abgasbehandlungseinheit (52) in die Umfangswand (14) an dem anderen axialen Endbereich (18) der Umfangswand (14),
c) nach der Maßnahme b), Anbringen eines zweiten der Abschlusselemente (20, 38) an dem anderen axialen Endbereich (18) der Umfangswand (14),
wobei bei der Maßnahme c) ein rohrartiger Umfangswand-Verbindungsbereich (40) des zweiten Abschlusselements (38) in den anderen axialen Endbereich (18) der Umfangswand (14) eingeschoben wird,
**dadurch gekennzeichnet, dass** bei der Maßnahme c) der rohrartige Umfangswand-Verbindungsbereich (40) des zweiten Abschlusselements (38) mit der Umfangswand (14) materialschlüssig verbunden wird, und dass bei der Maßnahme a) ein rohrartiger Umfangswand-Verbindungsbereich (22) des ersten Abschlusselements (20) den einen axialen Endbereich (16) der Umfangswand (14) radial außen umgreifend auf die Umfangswand (14) geschoben wird und mit der Umfangswand (14) materialschlüssig verbunden wird.

2. Verfahren nach Anspruch 1, **dadurch gekennzeichnet, dass** bei der Maßnahme a) der rohrartige Umfangswand-Verbindungsbereich (22) des ersten Abschlusselements (20) mit der Umfangswand (14) durch Verschweißen verbunden wird.

3. Verfahren nach Anspruch 1 oder 2, **dadurch gekennzeichnet, dass** bei der Maßnahme a) nach dem Anbringen des ersten Abschlusselements (20) an der Umfangswand (14) die Umfangswand (14) zur Bereitstellung einer Soll-Abmessung verformt, vorzugsweise radial aufgeweitet, wird.

4. Verfahren nach Anspruch 2 oder Anspruch 3, sofern auf Anspruch 2 rückbezogen, **dadurch gekennzeichnet, dass** bei der Maßnahme b) die mit der Stütz-Materiallage (54) umgebene Abgasbehandlungseinheit (52) so weit in die Umfangswand (14) eingeschoben wird, dass die Stütz-Materiallage (54) sich in einem axialen Bereich der materialschlüssigen Verbindung des ersten Abschlusselements (20) mit der Umfangswand (14) erstreckt oder/und sich axial mit dem Umfangswand-Verbindungsbereich (22) des ersten Abschlusselements (20) überlappt.

5. Verfahren nach einem der vorangehenden Ansprüche, **dadurch gekennzeichnet, dass** bei der Maßnahme b) die mit der Stütz-Materiallage (54) umgebene Abgasbehandlungseinheit (52) so weit in die Umfangswand (14) eingeschoben wird, dass die Abgasbehandlungseinheit (52) sich nicht über den einen axialen Endbereich (16) der Umfangswand (14) hinaus erstreckt.

6. Verfahren nach Anspruch 5, dass bei der Maßnahme b) die mit der Stütz-Materiallage (54) umgebene Abgasbehandlungseinheit (52) so weit in die Umfangswand (14) eingeschoben wird, dass die Abgasbehandlungseinheit (52) im Wesentlichen bündig mit der Umfangswand (14) endet.

7. Verfahren nach einem der Ansprüche 1-4, **dadurch gekennzeichnet, dass** bei der Maßnahme b) die mit der Stütz-Materiallage (14) umgebene Abgasbehandlungseinheit (52) so weit in die Umfangswand (14) eingeschoben wird, dass die Abgasbehandlungseinheit (52) sich über den einen axialen Endbereich (16) der Umfangswand (14) hinaus in einen in dem ersten Abschlusselement (20) gebildeten Abschlusselement-Innenraum (56) erstreckt.

8. Verfahren nach Anspruch 7, **dadurch gekennzeichnet, dass** die Abgasbehandlungseinheit (52) in ihrem in den Abschlusselement-Innenraum (56) sich erstreckenden Längenbereich nicht von der Stütz-Materiallage (54) umgeben ist.

9. Verfahren nach einem der vorangehenden Ansprüche, **dadurch gekennzeichnet, dass** bei der Maßnahme c) der rohrartige Umfangswand-Verbindungsbereich (40) des zweiten Abschlusselements (38) durch Verschweißen verbunden wird.

10. Verfahren nach einem der vorangehenden Ansprüche, **dadurch gekennzeichnet, dass** wenigstens ein, vorzugsweise jedes Abschlusselement (20, 38) einen trichterartigen Verjüngungsbereich (26, 44) zwischen einem rohrartigen Umfangswand-Verbindungsbereich (22, 40) und einem rohrartigen Abgasrohr-Verbindungsbereich (28, 46) umfasst.

11. Verfahren nach einem der vorangehenden Ansprüche, **dadurch gekennzeichnet, dass** das erste Abschlusselement (20) ein bezüglich einer Abgasströmungsrichtung (A) stromaufwärts bezüglich der Umfangswand (14) positioniertes Eingangs-Abschlusselement ist.

12. Verfahren nach einem der vorangehenden Ansprüche, **dadurch gekennzeichnet, dass** ein in dem ersten Abschlusselement (20) gebildeter Abschlusselement-Innenraum (56) innentrichterfrei ist, oder/und dass in einem in dem zweiten Abschlusselement (38) gebildeten Abschlusselement-Innenraum (43) ein Innentrichter (45) angeordnet ist.

13. Verfahren nach einem der vorangehenden Ansprüche, **dadurch gekennzeichnet, dass** nach der Maßnahme a) wenigstens das erste Abschlusselement (20) mit einer Isoliermateriallage und einer die Isoliermateriallage an ihrer Außenseite überdeckenden Dünnwandisolierung umgeben wird.

14. Verfahren nach einem der vorangehenden Ansprüche, **dadurch gekennzeichnet, dass** die Stütz-Materiallage (54) eine um den Außenumfang der Abgasbehandlungseinheit (52) gewickelte Fasermaterialmatte umfasst, oder/und dass die Abgasbehandlungseinheit (52) einen Partikelfilter umfasst.

15. Abgasbehandlungsanordnung, umfassend:
- eine Richtung einer Längsachse (L) langgestreckte, rohrartige Umfangswand (14) mit zwei axialen Endbereichen (16, 18),
- ein an einem der axialen Endbereiche (16, 18) der Umfangswand (14) mit einem Umfangswand-Verbindungsbereich (22) die Umfangswand (14) radial außen übergreifendes und an der Umfangswand (14) materialschlüssig, vorzugsweise durch Verschweißen, festgelegtes erstes Abschlusselement (20),
- ein an dem anderen der axialen Endbereiche (16, 18) der Umfangswand (14) mit einem Umfangswand-Verbindungsbereich (40) an der Umfangswand (14) materialschlüssig, vorzugsweise durch Verschweißen, festgelegtes zweites Abschlusselement (38),
- eine mit einer Stütz-Materiallage (54) umgebene und durch die Stütz-Materiallage (54) an der Umfangswand (14) gehaltene Abgasbehandlungseinheit (52),
wobei die Abgasbehandlungsanordnung mit einem Verfahren nach einem der Ansprüche 1-14 hergestellt ist,
wobei:
im einen axialen Endbereich (16) der Umfangswand (14) die Stütz-Materiallage (54) sich in einem axialen Bereich der materialschlüssigen Verbindung des ersten Abschlusselements (10) mit der Umfangswand (14) erstreckt oder/und sich axial mit dem Umfangswand-Verbindungsbereich (22) des ersten Abschlusselements (20) überlappt,
oder/und
die Abgasbehandlungseinheit (52) sich über den einen axialen Endbereich (16) der Umfangswand (14) hinaus in einen in dem ersten Abschlusselement (20) gebildeten Abschlusselementen-Innenraum (56) erstreckt,
oder/und
ein in dem ersten Abschlusselement (20) gebildeter Abschlusselement-Innenraum (56) innentrichterfrei ist.

16. Abgasanlage, umfassend eine Abgasbehandlungsanordnung nach Anspruch 15.

## Claims

1. Process for manufacturing an exhaust gas treatment device, the exhaust gas treatment device comprising a tubular circumferential wall (14) elongated in the direction of a longitudinal axis (L) with two axial end areas (16, 18), an exhaust gas treatment unit (52) arranged in the circumferential wall (14) as well as a closing element (20, 38) connected to the circumferential wall (14) at each of the two axial end areas (16, 18), wherein the exhaust gas treatment unit (52) is held at the circumferential wall (14) by a supporting material layer (54), which encloses the exhaust gas treatment unit (52) and supports the same in relation to the circumferential wall (14),
wherein the process comprises the steps of:
a) arranging a first of the two closing elements (20, 38) at one of the axial end areas (16, 18) of the circumferential wall (14),
b) after step a), pushing the exhaust gas treatment unit (52) enclosed by the supporting material layer (54) into the circumferential wall (14) at the other axial end area (18) of the circumferential wall (14),
c) after step b), arranging a second of the closing elements (20, 38) at the other axial end area (18) of the circumferential wall (14),
wherein in step c), a tubular circumferential wall connection area (40) of the second closing element (38) is pushed into the other axial end area (18) of the circumferential wall (14),
**characterized in that** in step c), the tubular circumferential wall connection area (40) of the second closing element (38) is connected to the circumferential wall (14) by connection in substance, and that in step a) a tubular circumferential wall connection area (22) of the first closing element (20) is pushed onto the circumferential wall (14) such that it extends around the one axial end area (16) of the circumferential wall (14) radially on the outside and is connected to the circumferential wall (14) by connection in substance.

2. Process in accordance with claim 1, **characterized in that** in step a) the tubular circumferential wall connection area (22) of the first closing element (20) is connected to the circumferential wall (14) by welding.

3. Process in accordance with claim 1 or 2, **characterized in that** in step a), the circumferential wall (14) is deformed, preferably radially widened, to provide a desired dimension after mounting the first closing element (20) at the circumferential wall (14).

4. Process in accordance with claim 2 or claim 3, if referred back to claim 2, **characterized in that** in step b), the exhaust gas treatment unit (52) enclosed with the supporting material layer (54) is pushed into the circumferential wall (14) to the extent that the supporting material layer (54) extends in an axial area of the connection in substance of the first closing element (20) to the circumferential wall (14) or/and it axially overlaps the circumferential wall connection area (22) of the first closing element (20).

5. Process in accordance with one of the preceding claims, **characterized in that** in step b), the exhaust gas treatment unit (52) enclosed with the supporting material layer (54) is pushed into the circumferential wall (14) to the extent that the exhaust gas treatment unit (52) does not extend beyond the one axial end area (16) of the circumferential wall (14).

6. Process in accordance with claim 5, **characterized in that** in step b), the exhaust gas treatment unit (52) enclosed with the supporting material layer (54) is pushed into the circumferential wall (14) to the extent that the exhaust gas treatment unit (52) ends essentially flush with the circumferential wall (14).

7. Process in accordance with one of the claims 1 to 4, **characterized in that** in step b), the exhaust gas treatment unit (52) enclosed with the supporting material layer (14) is pushed into the circumferential wall (14) to the extent that the exhaust gas treatment unit (52) extends beyond the one axial end area (16) of the circumferential wall (14) into a closing element interior space (56) formed in the first closing element (20).

8. Process in accordance with claim 7, **characterized in that** the exhaust gas treatment unit (52) is not enclosed by the supporting material layer (54) in its length area extending into the closing element interior space (56).

9. Process in accordance with one of the preceding claims, **characterized in that** in step c), the tubular circumferential wall connection area (40) of the second closing element (38) is connected by welding.

10. Process in accordance with one of the preceding claims, **characterized in that** at least one and preferably each closing element (20, 38) comprises a funnel-like tapering area (26, 44) between a tubular circumferential wall connection area (22, 40) and a tubular exhaust gas pipe connection area (28, 46).

11. Process in accordance with one of the preceding claims, **characterized in that** the first closing element (20) is an inlet closing element positioned upstream in relation to the circumferential wall (14) in relation to an exhaust gas flow direction (A).

12. Process in accordance with one of the preceding claims, **characterized in that** a closing element interior space (56) formed in the first closing element (20) is free from an inner funnel, or/and that an inner funnel (45) is arranged in a closing element interior space (43) formed in the second closing element (38).

13. Process in accordance with one of the preceding claims, **characterized in that** after step a), at least the first closing element (20) is enclosed with an insulating material layer and with a thin-wall insulation covering the insulating material layer on the outer side thereof.

14. Process in accordance with one of the preceding claims, **characterized in that** the supporting material layer (54) comprises a fiber material mat wound around the outer circumference of the exhaust gas treatment unit (52), or/and that the exhaust gas treatment unit (52) comprises a particle filter.

15. Exhaust gas treatment device, comprising:
- a tubular circumferential wall (14) elongated in the direction of a longitudinal axis (L) with two axial end areas (16, 18),
- a first closing element (20), which overlaps the circumferential wall (14) radially on the outside with a circumferential wall connection area (22) at one of the axial end areas (16, 18) of the circumferential wall (14) and is fixed at the circumferential wall (14) by connection in substance, preferably by welding,
- a second closing element (38) fixed at the circumferential wall (14) at the other of the axial end areas (16, 18) of the circumferential wall (14) with a circumferential wall connection area (40) by connection in substance, preferably by welding,
- an exhaust gas treatment unit (52) enclosed with a supporting material layer (54) and held by the supporting material layer (54) at the circumferential wall (14),
wherein the exhaust gas treatment device is manufactured by a procedure according to one of claims 1 to 14,
wherein:
the supporting material layer (54) extends in the one axial end area (16) of the circumferential wall (14) in an axial area of the connection in substance of the first closing element (10) to the circumferential wall (14) or/and it axially overlaps the circumferential wall connection area (22) of the first closing element (20),
or/and
the exhaust gas treatment unit (52) extends beyond the one axial end area (16) of the circumferential wall (14) into a closing element interior space (56) formed in the first closing element (20),
or/and
a closing element interior space (56) formed in the first closing element (20) is free from an inner funnel.

16. Exhaust system, comprising an exhaust gas treatment device in accordance with claim 15.

## Revendications

1. Procédé de fabrication d'un dispositif de traitement des gaz d'échappement, le dispositif de traitement des gaz d'échappement comprenant une paroi circonférentielle tubulaire (14) allongée dans la direction d'un axe longitudinal (L) avec deux zones d'extrémité axiales (16, 18), une unité de traitement des gaz d'échappement (52) disposée dans la paroi circonférentielle (14) ainsi qu'un élément de fermeture (20, 38) relié à la paroi circonférentielle (14) au niveau de chacune des deux zones d'extrémité axiales (16, 18), dans lequel l'unité de traitement des gaz d'échappement (52) est maintenue au niveau de la paroi circonférentielle (14) par une couche de matériau de support (54), qui entoure l'unité de traitement des gaz d'échappement (52) et la soutient par rapport à la paroi circonférentielle (14),
dans lequel le procédé comprend les étapes suivantes :
a) disposer un premier des deux éléments de fermeture (20, 38) à l'une des zones d'extrémité axiale (16, 18) de la paroi circonférentielle (14),
b) après l'étape a), pousser l'unité de traitement des gaz d'échappement (52) entourée par la couche de matériau de support (54) dans la paroi circonférentielle (14) à l'autre zone d'extrémité axiale (18) de la paroi circonférentielle (14),
c) après l'étape b), disposer un deuxième des éléments de fermeture (20, 38) à l'autre zone d'extrémité axiale (18) de la paroi circonférentielle (14),
dans lequel, à l'étape c), une zone de liaison de la paroi circonférentielle tubulaire (40) du deuxième élément de fermeture (38) est poussée dans l'autre zone d'extrémité axiale (18) de la paroi circonférentielle (14),
**caractérisé en ce que** dans l'étape c), la zone de liaison de la paroi circonférentielle tubulaire (40) du deuxième élément de fermeture (38) est reliée à la paroi circonférentielle (14) par liaison de matière, et **en ce que** dans l'étape a), une zone de liaison de la paroi circonférentielle tubulaire (22) du premier élément de fermeture (20) est enfilée sur la paroi circonférentielle (14) de telle sorte qu'elle s'étend radialement à l'extérieur autour d'une zone d'extrémité axiale (16) de la paroi circonférentielle (14) et est reliée à la paroi circonférentielle (14) par liaison de matière.

2. Procédé selon la revendication 1, **caractérisé en ce que** dans l'étape a), la zone de liaison de la paroi circonférentielle tubulaire (22) du premier élément de fermeture (20) est reliée à la paroi circonférentielle (14) par soudage.

3. Procédé selon la revendication 1 ou 2, **caractérisé en ce que** dans l'étape a), la paroi circonférentielle (14) est déformée, de préférence élargie radialement, pour fournir une dimension souhaitée après le montage du premier élément de fermeture (20) sur la paroi circonférentielle (14).

4. Procédé selon la revendication 2 ou la revendication 3, s'il est renvoyé à la revendication 2, **caractérisé en ce que** dans l'étape b), l'unité de traitement des gaz d'échappement (52) entourée par la couche de matériau de support (54) est poussée dans la paroi circonférentielle (14) de sorte que la couche de matériau de support (54) s'étend dans une zone axiale de la liaison de matière du premier élément de fermeture (20) à la paroi circonférentielle (14) ou/et elle recouvre axialement la zone de liaison de la paroi circonférentielle (22) du premier élément de fermeture (20).

5. Procédé selon l'une des revendications précédentes, **caractérisé en ce qu'**à l'étape b), l'unité de traitement des gaz d'échappement (52) entourée par la couche de matériau de support (54) est poussée dans la paroi circonférentielle (14) de sorte que l'unité de traitement des gaz d'échappement (52) ne s'étend pas au-delà de ladite une zone d'extrémité axiale (16) de la paroi circonférentielle (14).

6. Procédé selon la revendication 5, **caractérisé en ce que** dans l'étape b), l'unité de traitement des gaz d'échappement (52) entourée par la couche de matériau de support (54) est poussée dans la paroi circonférentielle (14) de sorte que l'unité de traitement des gaz d'échappement (52) se termine essentiellement en affleurement avec la paroi circonférentielle (14).

7. Procédé selon l'une des revendications 1 à 4, **caractérisé en ce que** dans l'étape b), l'unité de traitement des gaz d'échappement (52) entourée par la couche de matériau de support (14) est poussée dans la paroi circonférentielle (14) de sorte que l'unité de traitement des gaz d'échappement (52) s'étend au-delà de la zone d'extrémité axiale (16) de la paroi circonférentielle (14) dans un espace intérieur d'élément de fermeture (56) formé dans le premier élément de fermeture (20).

8. Procédé selon la revendication 7, **caractérisé en ce que** l'unité de traitement des gaz d'échappement (52) n'est pas entourée par la couche de matériau de support (54) dans sa zone longitudinale s'étendant dans l'espace intérieur de l'élément de fermeture (56).

9. Procédé selon l'une des revendications précédentes, **caractérisé en ce que** dans l'étape c), la zone de liaison de la paroi circonférentielle tubulaire (40) du deuxième élément de fermeture (38) est reliée par soudage.

10. Procédé selon l'une des revendications précédentes, **caractérisé en ce qu'**au moins un et de préférence chaque élément de fermeture (20, 38) comprend une zone conique en forme d'entonnoir (26, 44) entre une zone de liaison de paroi circonférentielle tubulaire (22, 40) et une zone de liaison de tuyau de gaz d'échappement tubulaire (28, 46).

11. Procédé selon l'une des revendications précédentes, **caractérisé en ce que** le premier élément de fermeture (20) est un élément de fermeture d'entrée positionné en amont par rapport à la paroi circonférentielle (14) par rapport à une direction d'écoulement des gaz d'échappement (A).

12. Procédé selon l'une des revendications précédentes, **caractérisé en ce qu'**un espace intérieur d'élément de fermeture (56) formé dans le premier élément de fermeture (20) est exempt d'un entonnoir intérieur, et/ou qu'un entonnoir intérieur (45) est disposé dans un espace intérieur d'élément de fermeture (43) formé dans le deuxième élément de fermeture (38).

13. Procédé selon l'une des revendications précédentes, **caractérisé en ce qu'**après l'étape a), au moins le premier élément de fermeture (20) est entouré d'une couche de matériau isolant et d'une isolation à paroi mince recouvrant la couche de matériau isolant sur son côté extérieur.

14. Procédé selon l'une des revendications précédentes, **caractérisé en ce que** la couche de matériau de support (54) comprend un mat de matériau fibreux enroulé autour de la circonférence extérieure de l'unité de traitement des gaz d'échappement (52), et/ou **en ce que** l'unité de traitement des gaz d'échappement (52) comprend un filtre à particules.

15. Dispositif de traitement des gaz d'échappement, comprenant :
- une paroi circonférentielle tubulaire (14) allongée dans la direction d'un axe longitudinal (L) avec deux zones d'extrémité axiales (16, 18),
- un premier élément de fermeture (20), qui chevauche radialement à l'extérieur la paroi circonférentielle (14) avec une zone de liaison de la paroi circonférentielle (22) à l'une des zones d'extrémité axiales (16, 18) de la paroi circonférentielle (14) et qui est fixé à la paroi circonférentielle (14) par liaison de matière, de préférence par soudage,
- un deuxième élément de fermeture (38) fixé à la paroi circonférentielle (14) à l'autre des zones d'extrémité axiales (16, 18) de la paroi circonférentielle (14) avec une zone de liaison de la paroi circonférentielle par liaison (40) de matière, de préférence par soudage, et
- une unité de traitement des gaz d'échappement (52) entourée d'une couche de matériau de support (54) et maintenue par la couche de matériau de support (54) au niveau de la paroi circonférentielle (14),
dans lequel le dispositif de traitement des gaz d'échappement est fabriqué par un procédé selon l'une des revendications 1 à 14,
dans lequel :
la couche de matériau de support (54) s'étend dans une zone d'extrémité axiale (16) de la paroi circonférentielle (14) dans une zone axiale de la liaison de matière du premier élément de fermeture (10) à la paroi circonférentielle (14) ou/et elle recouvre axialement la zone de liaison de la paroi circonférentielle (22) du premier élément de fermeture (20),
ou/et
l'unité de traitement des gaz d'échappement (52) s'étend au-delà de la zone d'extrémité axiale (16) de la paroi circonférentielle (14) dans un espace intérieur d'élément de fermeture (56) formé dans le premier élément de fermeture (20),
ou/et
un espace intérieur (56) formé dans le premier élément de fermeture (20) est exempt d'entonnoir intérieur.

16. Système d'échappement, comprenant un dispositif de traitement des gaz d'échappement selon la revendication 15.
